# EUROPEAN PATENT APPLICATION

(11) **EP 1 302 344 A2**
(43) Date of publication of application: **16.04.2003**
(21) Application number: 02022876.3
(22) Date of filing: 14.10.2002
(51) Int. Cl.: B60H 1/00, B60H 1/32

(54) **Vehicle air conditioner**

(30) Priority: 15.10.2001 JP 2001316911
(71) Applicant: Kabushiki Kaisha Toyota Jidoshokki, Kariya-shi, Aichi-ken (JP)
(72) Inventor: Ito, Masafumi, Kariya-shi, Aichi-ken (JP); Amano, Noriyuki, Kariya-shi, Aichi-ken (JP); Kawaguchi, Masahiro, Kariya-shi, Aichi-ken (JP); Arai, Tomoharu, Kariya-shi, Aichi-ken (JP); Fukushima, Shigeo, Kariya-shi, Aichi-ken (JP); Adaniya, Taku, Kariya-shi, Aichi-ken (JP)
(74) Representative: Leson, Thomas Johannes Alois, Dipl.-Ing.

(57) **Abstract**

An air conditioning system for a vehicle. The air conditioning system has a compressor, an evaporator and an intake door. The compressor is driven by a vehicle engine and a motor separately operable from the vehicle engine. The evaporator is disposed in a predetermined air passage to cool the air. The intake door is disposed upstream of the air passage, the intake door is switched between a first position and a second position. The intake door is arranged to introduce ambient air from outside of the vehicle in the first position and interior air from inside the vehicle in the second position. The air conditioning system is characterized in having a predicting means (51) for predicting an non-operating state of the vehicle engine (E), and a switching means (43) for switching the intake door (42) to the second position based on a prediction of the predicting means (51).

## Description

The present invention relates to a vehicle air conditioner. More particularly, the present invention relates to a vehicle air conditioner with a refrigerant circuit having a compressor that is driven by a vehicle drive source, or an engine, and an electric motor portion.

To improve fuel economy and satisfy needs for environment protection, idling stop control has been widely introduced. The idling stop control refers to a control for automatically stopping an idling engine when a vehicle comes to a stop, for example, at traffic lights. In a typical engine that performs idling stop control, a compressor that is selectively driven by a vehicle engine and an electric motor portion is used so that the compressor resumes air conditioning even if the engine is not running.

If the power of the electric motor portion in such a compressor is designed to match the power of a vehicle engine, the size of the motor will be increased. However, if the size of the electric motor portion is excessively increased, the motor portion cannot be installed in an engine compartment. Therefore, a relatively compact electric motor portion is used for this type of compressor.

To permit a compressor to be driven by a small power compact electric motor portion, the load on the motor portion needs to be reduced. Japanese Laid-Open Patent Publication No. 2001-80348 discloses this type of air conditioning system which is selectively driven by a vehicle engine and an electric motor. This air conditioning system has an evaporator, which is located in an air passage and forms a part of a refrigerant circuit. The evaporator cools air sent from a blower. An intake door located at the inlet of the air passage is switched between an outside air conducting position for conducting air from the exterior of the vehicle into the air passage, and an internal air circulation position for conducting air from the cabin into the air passage. An air mix door is located in a downstream section of the air passage. The opening size of the air mix door is changed for adjusting the flow rate of air sent to a heater core through the evaporator. Accordingly, the temperature of air sent from the air passage to the cabin is controlled.

In this air conditioning system, air in the cabin is introduced into the air passage by switching the intake door. The air mix door is shut for preventing the air from reaching the heater core at a full cooling position. Thus, air in the cabin, the temperature of which is controlled, is drawn into the air passage and then cooled by the evaporator. The cooled air is released to the cabin without flowing through the heater core.

Since the air in the cabin is drawn into the air passage, power consumption of the compressor is reduced compared to the case where the intake door is switched to the position for conducting air from the exterior. The temperature of the cabin is controlled. Further, the temperature of air blown out of the system is cooled by the evaporator when the air mix door is at the fully cooling position. The power consumption of the compressor is reduced, accordingly, compared to the state where the air mix door is open to pass the air through the heater core. Therefore, although the small power electric motor portion is used, cooling performance of the system is guaranteed to a certain extent.

However, in the above air conditioning system, the positions of the intake door and the air mix door are changed after the engine is stopped. The positions of the intake door and the air mix door are changed when the intake door is at the position for introducing the air from the exterior of the vehicle and the air mix door is at a position for conducting the air to the heater core. Since the positions of the doors are changed in a relatively quiet state, or when the engine is not running, the noise of the door movements disturbs the passengers.

When the engine E is stopped while the air mix door is open and the intake door is at the position for conducting outside air, the doors are moved after a certain period has elapsed. During this period, some air is introduced from the exterior of the vehicle and passes through the heater core, which increases the temperature of air sent to the cabin. The increase of the air temperature also disturbs the passengers.

Accordingly, it is an objective of the present invention to provide a vehicle air conditioner that guarantees an adequate cooling performance when a compressor is driven by a compact motor portion and also guarantees passenger comfort.

It is another objective of the invention to provide an air conditioning system for a vehicle. The air conditioning system has a compressor, an evaporator and an intake door. The compressor is driven by a vehicle engine and a motor separately operable from the vehicle engine. The evaporator is disposed in a predetermined air passage to cool the air. The intake door is disposed upstream of the air passage, the intake door is switched between a first position and a second position. The intake door is arranged to introduce ambient air from outside of the vehicle in the first position and interior air from inside the vehicle in the second position. The air conditioning system is characterized in having a predicting means (51) for predicting an non-operating state of the vehicle engine (E), and a switching means (43) for switching the intake door (42) to the second position based on a prediction of the predicting means (51).

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a cross-sectional view illustrating a variable displacement swash plate type compressor;
Fig. 2 is a schematic diagram showing a vehicle air conditioner; and
Fig. 3 is a flowchart showing air conditioning control executed by an air conditioner ECU.

A preferred embodiment of the present invention will now be described.

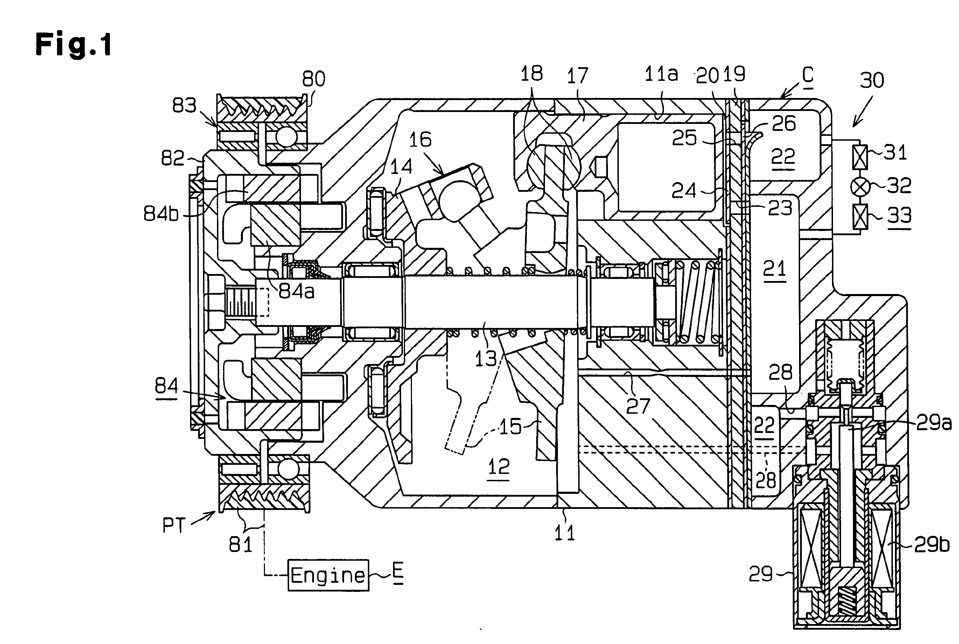

As shown in Fig. 1, a variable displacement swash plate type compressor C includes a housing 11. A crank chamber 12 is defined in the housing 11. A drive shaft 13 is rotatably provided in the crank chamber 12. The drive shaft 13 is coupled to an output shaft of a vehicle engine E through a power transmission PT.

The power transmission PT includes a rotor 80, which is rotatably supported by the housing 11. The rotor 80 is engaged with a belt 81, which is also engaged with the engine E. A hub 82 is fixed to a portion of the drive shaft 13 that protrudes out of the housing 11. A conventional one-way clutch 83 is located between the rotor 80 and the hub 82.

The power transmission PT includes an electric motor 84. The electric motor 84 is located radially inward of the rotor 80. The motor 84 includes a stator 84a and a rotor 84b. The stator 84a is fixed to the housing 11. The rotor 84b is fixed to the hub 82 and surrounds the stator 84a. Supplying current to the stator 84a generates rotational force at the rotor 84b and rotates the drive shaft 13 through the hub 82. In this state, the one-way clutch 83 blocks transmission of power from the hub 82 to the rotor 80. The rotational force generated by the motor 84 is therefore not undesirably transmitted to the engine E.

The one-way clutch 83 permits power to be transmitted from the rotor 80 to the hub 82. Therefore, when the engine E is running, power of the engine E is transmitted to the drive shaft 13 through the rotor 80 and the hub 82.

A lug plate 14 is coupled to the drive shaft 13 and is located in the crank chamber 12. The lug plate 14 rotates integrally with the drive shaft 13. A swash plate 15 is accommodated in the crank chamber 12. The swash plate 15 slides along and inclines with respect to the drive shaft 13.

A hinge mechanism 16 is arranged between the lug plate 14 and the swash plate 15. The hinge mechanism 16 permits the swash plate 15 to rotate integrally with the lug plate 14 and the drive shaft 13, and to incline with respect to the drive shaft 13.

The housing 11 has cylinder bores 11a (only one is shown). Each cylinder bore 11a accommodates a single-headed piston 17. Each piston 17 reciprocates inside the corresponding cylinder bore 11a. Each piston 17 is coupled to the peripheral portion of the swash plate 15 by a pair of shoes 18. The shoes 18 convert rotation of the swash plate 15, which rotates with the drive shaft 13, to reciprocation of the pistons 17.

A compression chamber 20 is defined at the rear section (right section as viewed in Fig. 1) of each cylinder bore 11a. The compression chamber 20 is defined by the corresponding piston 17 and a valve plate assembly 19 provided in the housing 11. A suction chamber 21 and a discharge chamber 22 are defined in the rear section of the housing 11.

The valve plate assembly 19 has suction ports 23, suction valve flaps 24, discharge ports 25 and discharge valve flaps 26. Each set of the suction port 23, the suction valve flap 24, the discharge port 25 and the discharge valve flap 26 corresponds to one of the cylinder bores 11a. As each piston 17 moves from the top dead center to the bottom dead center, refrigerant gas in the suction chamber 21 is drawn into the corresponding compression chamber 20 through the corresponding suction port 23 while flexing the suction valve flap 24 to an open position. Refrigerant gas that is drawn into the compression chamber 20 is compressed to a predetermined pressure as the piston 17 is moved from the bottom dead center to the top dead center. Then, the gas is discharged to the discharge chamber 22 through the corresponding discharge port 25 while flexing the discharge valve flap 26 to an open position.

As shown in Fig. 1, a bleed passage 27 and a supply passage 28 are formed in the housing 11. The bleed passage 27 connects the crank chamber 12 with the suction chamber 21. The supply passage 28 connects the crank chamber 12 with the discharge chamber 22. A control valve 29 is located in the housing 11 to regulate the supply passage 28. The control valve 29 is an electromagnetic valve that includes a valve body 29a and an electromagnetic actuator 29b. The valve body 29a is actuated by the electromagnetic actuator 29b to regulate the opening size of the supply passage 28.

The opening of the control valve 29 is adjusted to control the balance between the flow rate of highly pressurized gas supplied to the crank chamber 12 through the supply passage 28 and the flow rate of gas conducted out from the crank chamber 12 through the bleed passage 27. The pressure in the crank chamber 12 is thus adjusted. As the pressure in the crank chamber 12 varies, the difference between the pressure in the crank chamber 12 and the pressure in the compression chambers 20 with the pistons 17 in between is changed. This changes the inclination angle of the swash plate 15. Accordingly, the stroke of each piston 17, or the compressor displacement, is controlled.

For example, when the pressure in the crank chamber 12 is decreased, the inclination angle of the swash plate 15 is increased. The displacement of the compressor C is increased, accordingly. When the pressure in the crank chamber 12 is increased, the inclination angle of the swash plate 15 is decreased. The displacement of the compressor C is decreased, accordingly.

As shown in Fig. 1, the refrigerant circuit of the vehicle air conditioner, or the cooling cycle, includes the compressor C and an external refrigerant circuit 30. The external refrigerant circuit 30 includes a condenser 31, an expansion valve 32, and an evaporator 33.

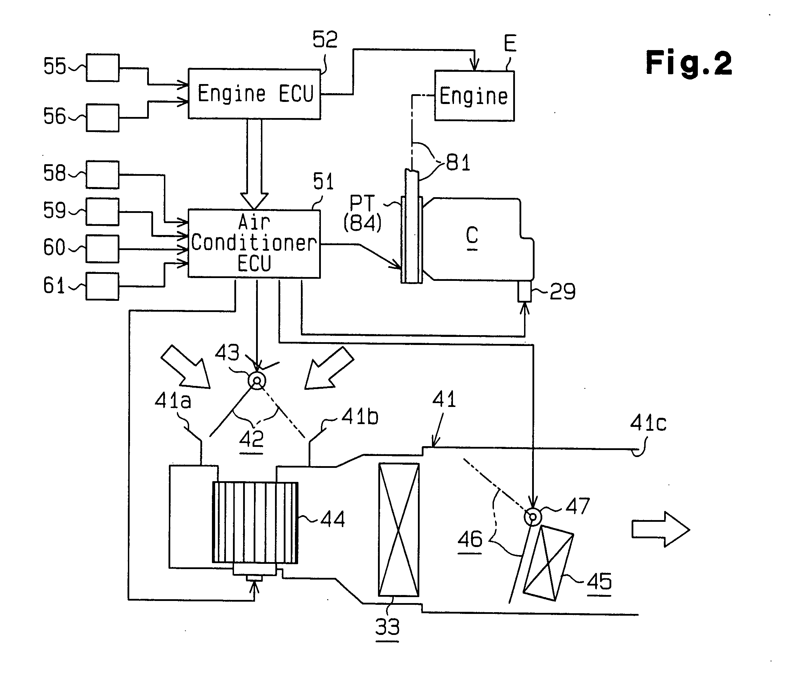

As shown in Fig. 2, an outside air inlet 41a and an in-car air inlet 41b are formed in the most upstream section of an air conditioner duct 41. The outside air inlet 41a opens to the outside of the cabin. The in-car air inlet 41b opens to the cabin. An intake door 42 is located in the air conditioner duct 41. The intake door 42 selectively opens and closes the outside air inlet 41a and the in-car air inlet 41b. The intake door 42 includes an intake door actuator 43, which is, for example, a servomotor. The intake door 42 is opened and closed by the intake door actuator 43.

For example, during heating or during normal cooling, the intake door 42 is switched to the position of the outside air inlet 41a as shown by two dotted chain line in Fig. 2. In this position, outside air is introduced. In other words, the intake door 42 is at an "outside air conducting mode". On the other hand, during rapid cooling, the intake door 42 selects the in-car air inlet 41b as shown by a solid line in Fig. 2 to draw the air from the cabin. In other words, the intake door 42 is switched at an "internal circulation mode."

A blower 44 is located downstream of the intake door 42 and in a section of the air conditioner duct 41. An evaporator 33 of the refrigerant circuit is located downstream of the blower 44 in the refrigerant circuit. The evaporator 33 cools air from the blower 44.

A heater core (heater) 45 is located in the air conditioner duct 41 downstream of the evaporator 33. The heater core 45 uses, for example, coolant of the engine E as the heat source. An air mix door 46 is located upstream of the heater core 45. The air mix door 46 splits air cooled by the evaporator 33 into a flow through heater core 45 and a flow that detours around the heater core 45. The air mix door 46 is opened and closed by an air mix door actuator 47, which is, for example, a servomotor.

Air cooled and dehumidified by the evaporator 33 is split by the air mix door 46. In accordance with the opening degree of the air mix door 46, the flow rate of the air sent to the heater core 45 and the flow rate of the air that detours around the heater core 45 are determined. The air that flows through the heater core 45 is heated. The split air is mixed at a section downstream of the heater core 45. Accordingly, the temperature of the air is adjusted to a desired temperature. The air of the adjusted temperature is blown into the cabin through an outlet 41c located downstream of the air conditioner duct 41.

If the air mix door 46 is at a fully heating position (fully open), as shown by two-dot chain line in Fig. 2, most of air that passed through the evaporator 33 flows through the heater core 45, which improves the heating performance. If the air mix door 46 is at a fully cooling position (fully closed), as shown by solid line in Fig. 2, most of air passed through the evaporator 33 detours around the heater core 45, which improves the cooling performance.

As shown in Fig. 2, the vehicle has an air conditioner ECU 51 and an engine ECU 52. The air conditioner ECU 51 controls air conditioning. The engine ECU 52 controls the engine E, or controls the start, stop, and output of the engine E. The ECUs 51, 52 are electronic control units or controllers similar to computers. The air conditioner ECU 51 serves as predicting means for predicting a non-operating state of the vehicle engine, switching means for switching the intake door, and controlling means for controlling the position of the air mix door. The air conditioner ECU 51 and the engine ECU 52 are connected to each other to communicate with each other.

The engine ECU 52 is connected to a vehicle speed sensor 55 and an engine speed sensor 56. The vehicle speed sensor 55 detects the speed V of the vehicle. The engine speed sensor 56 detects the speed Ne of the engine E. The engine ECU 52 performs idling stop control. In the idling stop control, the engine ECU 52 stops the idling engine E when, for example, the vehicle stops at traffic lights without manipulation of the ignition switch (not shown) by the driver. Automatic stop of the engine E is executed when the vehicle speed information V from the vehicle speed sensor 55 is zero and the engine speed information Ne from the engine speed sensor 56 represents a state of idling for a predetermined period.

The air conditioner ECU 51 is connected to an air conditioner switch 58, a temperature setter 59, an in-car temperature sensor 60, and an evaporator temperature sensor 61. The air conditioner switch 58 is used for turning on and off the air conditioner. The temperature setter 59 is used for setting a target temperature in the cabin. The in-car temperature sensor 60 detects the temperature in the cabin. The evaporator temperature sensor 61 detects the temperature of air just passed through the evaporator (after evaporator temperature). The air conditioner ECU 51 controls the motor 84 of the power transmission PT, the control valve 29 of the compressor C, the blower 44, the intake door 42, and the air mix door 46 based on information from the information detection means 58-61, and the information from the information detection means 55, 56 sent through the engine ECU 52.

The air conditioner ECU 51 controls the electromagnetic actuator 29b of the control valve 29, the blower 44, the intake door actuator 43, and the air mix door actuator 47 based on target temperature information from the temperature setter 59, the in-car temperature information from the in-car temperature sensor 60, and the evaporator temperature information from the evaporator temperature sensor 61, thereby controlling air conditioning elements, such as the target temperature information, the in-car temperature information, the after evaporator temperature information, in a normal manner such that air having a desirable temperature is blown into the cabin. In other words, the above described temperature setter 59, in-car temperature sensor 60 and evaporator temperature sensor 61 serve as instruction means which provide information regarding thermal load of the air conditioner to the controller.

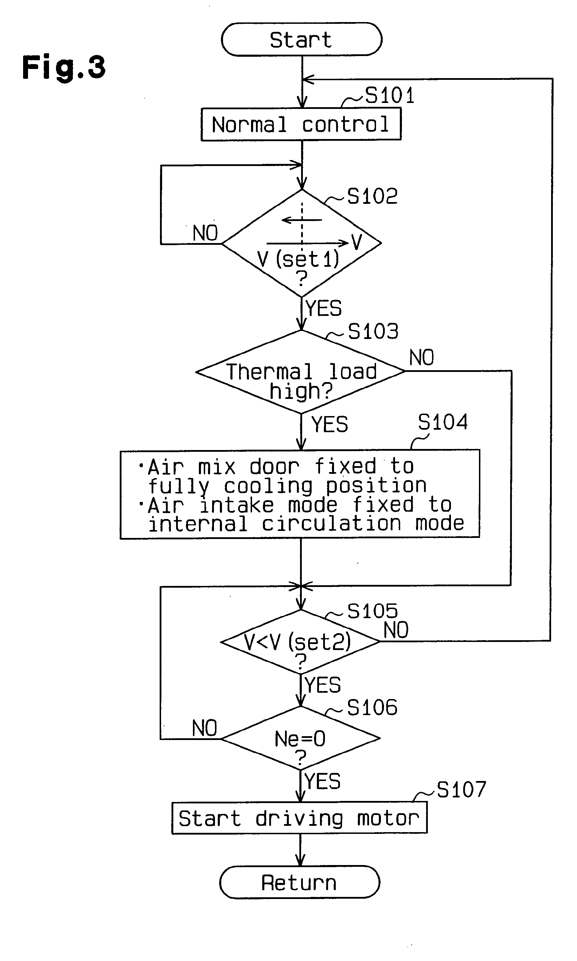

When the air conditioner switch 58 is on, the air conditioner ECU 51 performs the air conditioning control in accordance with the flowchart of Fig. 3.

That is, in step (hereinafter referred to as S) 101, the air conditioner ECU 51 starts a normal control. In S102, the air conditioner ECU 51 predicts stopping of the vehicle based on the vehicle speed information V sent from the engine ECU 52. Specifically, when the vehicle speed information V from the engine ECU 52 falls below a predetermined value (set1, which is for example 10 km per hour), the air conditioner ECU 51 determines that the driver is trying to stop the vehicle. In this case, the air conditioner ECU 51 predicts that the idling stop control (stopping of the engine E) will soon be executed. If the outcome of S102 is negative, the monitoring of stopping of the vehicle is continued.

If the outcome of S102 is positive, the air conditioner ECU 51 proceeds to S103. In S103, the air conditioner ECU 51 judges whether the thermal load is high based on the target temperature information from the temperature setter 59, the in-car temperature information from the in-car temperature sensor 60, and the evaporator temperature information from the evaporator temperature sensor 61. If the outcome of S103 is negative, the air conditioner ECU 51 continues the normal control and proceeds to S105.

If the outcome of S103 is positive, the air conditioner ECU 51 proceeds to S104 and restricts some processes in the normal control. That is, in S104, the intake door 42 is fixed to a position for drawing the air from the cabin, and the air mix door 46 is fixed to a position to blocking air flow to the heat core 45. If the intake door 42 is at a position to draw outside air immediately before S104 is executed, the position of the intake door 42 is gradually changed taking a predetermined period in S104.

If the outcome of S103 is negative or when S104 is finished, the air conditioner ECU 51 proceeds to S105. In S105, the air conditioner ECU 51 judges whether the vehicle speed V is less than a predetermined value V (set2, which is, for example, 30 km per hour). If the outcome of S105 is negative, that is, if the vehicle speed has greatly accelerated since the execution of S102, the air conditioner ECU 51 judges that the prediction that the vehicle is stopping proves wrong and returns to step 101. Therefore, if S104 has been executed, the restriction to the normal control in S104 is discontinued, and the normal air conditioning is executed without restriction.

If the outcome of S105 is positive, the air conditioner ECU 51 proceeds to S106 and determines whether the engine E has been stopped based on the engine speed information from the engine ECU 52. That is, if the engine speed information Ne from the engine ECU 52 is zero, the air conditioner ECU 51 determines that the engine E has stopped. Here, the air conditioner ECU 51, which is a controller of the air conditioner, serves as a determining means to determine that the engine is stopped. If the outcome of S106 is negative, the air conditioner ECU 51 proceeds to S105 and monitors the vehicle speed V, or continues monitoring if the positive outcome of S102 (prediction that vehicle is stopping) is right. If the outcome of S106 is positive, that is, if the engine E is stopped according to the positive outcome of S102, the air conditioner ECU 51 proceeds to S107. In S107, the air conditioner ECU 51 serves as an actuator to drive the motor 84 of the power transmission PT so that the motor 84 drives the compressor C.

When the compressor C is driven by the motor 84 after the routine of Fig. 3 except S104 has been executed, which is low thermal load state, air conditioning through the above described normal control is performed. Therefore, like the case where the compressor C is driven by the engine E, comfortable air conditioning is performed. If S104 has been executed, which is high thermal load state, part of the normal control is restricted. That is, the air intake mode is fixed to the internal circulation mode, and the air mix door 46 is fixed to the fully cooling position. Therefore, compared to a case where the air intake mode is fixed to the outside air intake mode or to a case where the air mix door 46 is open, the power consumption of the compressor C for blowing cooled air having the same temperature is reduced. Thus, the motor 84, which produces less power than the engine E, guarantees a cooling performance of a certain degree.

As described above, when the compressor C is driven by the motor 84, the air conditioner ECU 51 fixes the intake door 42 at the internal circulation mode position and fixes the air mix door 46 at the fully cooling position. Thus, the motor 84, which produces relatively small power, guarantees a cooling performance of a certain degree. When the compressor C is driven by the engine E, the air conditioner ECU 51 monitors whether the engine E is likely to stop. When predicting that the engine E will stop, the air conditioner ECU 51 fixes the intake door 42 at an internal air circulation position and the air mix door 46 at a fully cooling position. The air is not passed through the heat core 45 at the fully cooling position.

That is, when the compressor C is driven by the motor 84, and the intake door 42 is at the outside air conducting position and the air mix door 46 is open, the positions of the intake door 42 and the air mix door 46 are changed in S104 before the engine E is stopped. Therefore, the noise generated by changing the positions of the doors 42, 46 is inconspicuous in the noise of the engine E. Therefore, noise of the doors 42, 46 (the noise of the actuators 43, 47) does not disturb the passengers.

The positions of the doors 42, 46 are changed before the engine E is stopped. Therefore, the temperature of air blown into the cabin is prevented from increasing in a short period, and the passengers are not disturbed compared to the case where the doors are changed after the engine E is stopped.

Generally, switching the intake air mode produces a great fluctuation of noise at the outlet 41c. However, if the intake door 42 is at the position to introduce outside air immediately before S104 of Fig. 3, the air conditioner ECU 51 switches the intake door 42 gradually to a position to introduce the air in the cabin in S104. Therefore, fluctuation of noise at the outlet 41c is prevented, which reduces disturbing noise when the engine E is stopped.

In S102 of Fig. 3, the air conditioner ECU 51 predicts whether the vehicle is stopping. When predicting that the vehicle is stopping, the air conditioner ECU 51 predicts that the engine E will stop. That is, the restriction of part of the normal control in S104 is executed while the vehicle is running. Therefore, the noise of the doors 42, 46 is inconspicuous in the noise of the vehicle other than the noise of the engine E, or in the noise from the road. Therefore, the noise of the doors 42, 46 is effectively prevented from disturbing the passengers.

The motor 84 is located in the power transmission PT. Compared to a case where an electric motor is located outside of the power transmission PT, the size of the motor 84 is limited. If the size is limited, the performance of the motor 84 is difficult to improve. The present invention is therefore advantageous in that the motor 84, which produces relatively small power, guarantees a cooling performance to a certain degree.

It should be apparent to those skilled in the art that the present invention may be embodied in many other specific forms without departing from the spirit or scope of the invention. Particularly, it should be understood that the invention may be embodied in the following forms.

A brake sensor may be provided for detecting whether the brake pedal is depressed, or whether the vehicle is being braked. In this case, S102 of Fig. 3 may be replaced by a step for determining that the driver is stopping the vehicle when the vehicle speed V is less than a predetermined value (for example, 30 km) and the brake pedal is being depressed.

S102 of Fig. 3 may be replaced by a step for determining that the driver is stopping the vehicle when the engine speed Ne drops from a value equal to or greater than a predetermined value, which is greater than the idling speed, to a value less than the predetermined value.

S103 of Fig. 3 may be omitted so that, when the motor 84 is driving the compressor, the intake door 42 is at the position to draw the air in the cabin regardless of the thermal load, and the air mix door 46 is fixed to the fully cooling position.

S104 of Fig. 3 may be changed such that only one of the intake door 42 and the air mix door 46 is changed.

The air conditioner ECU 51 may have its own vehicle speed sensor and engine speed sensor. In this case, the air conditioner ECU 51 obtains the vehicle speed information V and the engine speed information Ne without transmission delay, which improves the accuracy of the air conditioning control.

The present invention may be applied to a vehicle air conditioner using a power transmission PT that has no an electric motor. That is, the motor 84 may be located in the housing 11 of the compressor C. Alternatively, the motor 84 may be independent from the compressor C.

The compressor C is not limited to a variable displacement type, but may be a fixed displacement type. In this case, a clutch mechanism such as an electromagnetic clutch is located in a power transmission path between the engine E and the compressor C to stop the compressor C when no cooling is needed while the engine E is running. The displacement of the compressor C is externally controlled through the electromagnetic valve 29 in the illustrated embodiment. The displacement of the compressor C is preferably minimized when no cooling is needed.

The compressor C may be replaced by a wave cam plate type compressor or a doubled-headed piston type compressor. Alternatively, the compressor C may be replaced by non-piston type compressors such as a scroll compressor or a vane compressor. In other words, the present invention may be applied to a vehicle air conditioner equipped with any of the listed compressor.

It should be apparent to those skilled in the art that the present invention may be embodied in many other specific forms without departing from the spirit or scope of the invention. Particularly, it should be understood that the invention may be embodied in the following forms.

## Claims

1. An air conditioning system for a vehicle, said air conditioning system having a controller, a compressor, an evaporator and an intake door, said compressor being driven by a vehicle engine and a motor separately operable from the vehicle engine, said evaporator being disposed in an air passage to cool the air, said intake door being disposed upstream of the air passage, said intake door being switched between a first position and a second position, said intake door being arranged to introduce air from outside of the vehicle in the first position and to introduce interior air from inside the vehicle in the second position, said air conditioning system **characterized in that** said controller has a predicting means and an intake door switching means, said predicting means (51) predicting an non-operating state of the vehicle engine (E), and said intake door switching means (43) switching the intake door (42) to the second position based on a prediction of the predicting means (51).

2. An air conditioning system as set forth in claim 1, **characterized in that** said air passage includes an air duct (41) accommodating a blower (44).

3. An air conditioning system for controlling a temperature of a cabin in a vehicle that is driven by a vehicle engine, wherein said air conditioning system has a controller, a compressor, a heater, an air mix door and a air mix door control means, said compressor being provided in a refrigerant circuit, said heater being provided in an air passage to heat the cold air so as to adjust the cabin temperature to a desired value, said air mix door disposed upstream of the heater in the air passage to adjust amount of the air flowing to the heater, said air mix door being movable between a first position and a second position, said air mix door in the first position allowing full amount of the air to flow to the heater, said air mix door in the second position prohibiting the air flow to the heater, said air mix door control means being provided for controlling a position of the air mix door, said air conditioning system **characterized in that** the controller has a predicting means (51) for predicting an non-operating state of the vehicle engine (E) and an instruction means (58, 59, 60, 61) for providing the air mix door control means (47) with instructions relating to condition for adjusting the cabin temperature to the desired value, said air mix door control means (47) controlling the position of the air mix door (46) based on at least one of the instructions from the instruction means (58, 59, 60, 61) and the predicting means (51).

4. An air conditioning system as set forth in claim 3, said system **characterized in** further comprising an evaporator (33) disposed upstream of the air mix door (46) in the air passage.

5. An air conditioning system for a vehicle that is driven by a vehicle engine, said air conditioning system having a controller, a refrigerant circuit, an air passage, an intake door, an intake door switching means, an air mix door and an air mix door control means, said refrigerant circuit including an evaporator and a compressor selectively operated by the vehicle engine and a motor, said air passage including said evaporator for cooling air blown from a blower and a heater for heating the cold air so as to adjust the cabin temperature to a desired value, said intake door being provided upstream of the blower in the air duct, said intake door being switched between a first position and a second position, said intake door being arranged to introduce air from outside of the vehicle in the first position and interior air from inside the vehicle in the second position, said air mix door disposed upstream of the heater in the air passage to adjust amount of the air flowing to the heater, said air mix door being movable between a first position and a second position, said air mix door in the first position allowing full amount of the air to flow to the heater, said air mix door in the second position prohibiting the air flow to the heater, said air mix door control means being provided for controlling a position of the air mix door, said air conditioning system **characterized in that** the controller has a predicting means (51) and an instruction means (58, 59, 60, 61), said predicting means (51) predicting a non-operating state of the vehicle engine (E), said intake door switching means (43) switching the intake door (42) in the second position based on a prediction of the predicting means (51), said instruction means (58, 59, 60, 61) providing the control means (47) with instructions relating to condition for adjusting the cabin temperature to the desired value, said air mix door control means (47) controlling the air mix door (46) based on at least one of the instructions from the predicting means (51) and the instruction means (58, 59, 60, 61).

6. An air conditioning system as set forth in claim 1, 3 and 5, **characterized in** having a housing (11) of the compressor (C) and a power transmission (PT) including a rotor (80) that is rotatably supported by the housing (11) and an electric motor (84).

7. An air conditioning system as set forth in claims 1, 3 and 5, **characterized in** having a determining means (52) for determining the non-operating state of the vehicle engine (E) and an actuator (52) for actuating the motor (84) when the non-operating state of the vehicle engine (E) is determined.

8. An air conditioning system as set forth in claims 1, 3 and 5, **characterized in** having a sensor (55) for detecting a vehicle speed, said predicting means (51) predicting the non-operating state of the vehicle engine (E) when the vehicle speed becomes lower than a predetermined value.

9. An air conditioning system as set forth in claim 3 and 5, **characterized in that** said instruction means (58, 59, 60, 61) provides the instructions including a preset the cabin temperature and the temperature of the air that passes the evaporator (33).

10. A method for controlling a temperature of a cabin in a vehicle that is driven by a vehicle engine, said method uses an air conditioning system which control the temperature of the cabin according to a thermal load, said system having a controller, an air mix door and an intake door, said air mix door disposed upstream of a heater so as to adjust the amount of air flowing through the heater to adjust the cabin temperature to a desired value, said intake door being arranged to introduce air from outside of the vehicle in a first position and to introduce interior air from inside the vehicle in a second position, said method **characterized in** having the steps of:
predicting (S102) whether the vehicle is stopping based on the fact that a speed of the vehicle falls below a predetermined value;
instructing (S103) the controller (51) with instructions relating to condition for adjusting the cabin temperature to a desired value;
adjusting (S104) a position of the air mix door (46) when the vehicle is stopping and when the thermal load is high so as to prohibit the air from flowing through the heater (45);
switching (S104) a position of the intake door (42) to the second position when the vehicle is stopping and the thermal load is high;
determining (S106) a non-operating state of the vehicle engine (E); and
actuating (S107) a motor (84) when the non-operating state of the vehicle engine (E) is determined.
